# EUROPEAN PATENT APPLICATION

(11) **EP 3 893 190 A1**
(43) Date of publication of application: **13.10.2021**
(21) Application number: 19893890.4
(22) Date of filing: 04.09.2019
(51) Int. Cl.: G06Q 50/30, G06Q 50/10

(54) **INFORMATION PROCESSING METHOD, INFORMATION PROCESSING DEVICE, AND PROGRAM**

(30) Priority: 07.12.2018 US 201862776785 P; 29.05.2019 JP 2019100498
(71) Applicant: Panasonic Intellectual Property Corporation of America, Torrance, CA 90503 (US)
(72) Inventor: KUHARA, Shunsuke, Osaka-shi, Osaka 540-6207 (JP); TOJIMA, Masayoshi, Osaka-shi, Osaka 540-6207 (JP)
(74) Representative: Vigand, Philippe
(86) International application number: PCT/JP2019/034677
(87) International publication number: WO 2020/115969

(57) **Abstract**

In an information processing method, a computer obtains a result of sensing the interior of a mobile body (300), performs a recognition process of recognizing at least one of dirt and damage inside the mobile body (300), on the basis of the sensing result, determines a handler who handles at least one of the dirt and the damage inside the mobile body (300), according to the result of the recognition process, and outputs a notification for the handler to handle the interior of the mobile body (300).

## Description

### TECHNICAL FIELD

The present disclosure relates to information processing methods for information related to mobile bodies.

### BACKGROUND ART

Conventionally, techniques for managing operations of mobile bodies are known (Patent Literature (PTL) 1).

Furthermore, techniques related to mobile bodies including robots that automatically clean the interior of the mobile bodies are disclosed (PTL 2).

### Citation List

### Patent Literature

PTL 1: Japanese Unexamined Patent Application Publication No. 2013-054537
PTL 2: Japanese Unexamined Patent Application Publication No. 2002-166379

### SUMMARY OF THE INVENTION

### TECHNICAL PROBLEM

In the management of the operations of a mobile body, when there is any dirt or damage inside the mobile body, it is preferred that an appropriate handler handle the dirt or the damage.

In view of this, an object of the present disclosure is to provide an information processing method, an information processing device, and a program by which an appropriate handler can be assigned to handle dirt or damage inside a mobile body.

### SOLUTIONS TO PROBLEM

An information processing method according to one aspect of the present disclosure includes the following executed by a computer: obtaining a result of sensing an interior of a mobile body; performing a recognition process of recognizing at least one of dirt or damage inside the mobile body, based on the result of sensing; determining a handler who handles the at least one of the dirt or the damage inside the mobile body, according to a result of the recognition process; and outputting a notification for the handler to handle the interior of the mobile body.

An information processing device according to one aspect of the present disclosure includes: an obtainer which obtains a result of sensing an interior of a mobile body; a recognition process executor which performs a recognition process of recognizing at least one of dirt or damage inside the mobile body, based on the result of sensing; and a handler determination unit configured to determine a handler who handles the at least one of the dirt or the damage inside the mobile body, according to a result of the recognition process, and output a notification for the handler to handle the interior of the mobile body.

A program according to one aspect of the present disclosure causes a computer to execute a first process including the following executed by the computer: obtaining a result of sensing an interior of a mobile body; performing a recognition process of recognizing at least one of dirt or damage inside the mobile body, based on the result of sensing; determining a handler who handles the at least one of the dirt or the damage inside the mobile body, according to a result of the recognition process; and outputting a notification for the handler to handle the interior of the mobile body.

### ADVANTAGEOUS EFFECT OF INVENTION

With the information processing method, the information processing device, and the program according to one aspect of the present disclosure, an appropriate handler can be assigned to handle dirt or damage inside a mobile body.

### BRIEF DESCRIPTION OF DRAWINGS

FIG. 1 is a block diagram illustrating the configuration of an information processing system according to Embodiment 1.
FIG. 2 is a schematic diagram illustrating one example of handler information stored in a handler management database according to Embodiment 1.
FIG. 3 is a schematic diagram illustrating another example of handler information stored in a handler management database according to Embodiment 1.
FIG. 4A is a schematic diagram illustrating one example of the interior of a mobile body according to Embodiment 1.
FIG. 4B is a schematic diagram illustrating one example of the interior of a mobile body according to Embodiment 1.
FIG. 4C is a schematic diagram illustrating one example of the interior of a mobile body according to Embodiment 1.
FIG. 5 is a schematic diagram illustrating one example of a table stored in a recognition process executor according to Embodiment 1.
FIG. 6 is a schematic diagram illustrating one specific example of percentages of a dirt or damage range in a predetermined area inside a mobile body according to Embodiment 1.
FIG. 7 is a schematic diagram illustrating one example of a first table stored in a handler determination unit according to Embodiment 1.
FIG. 8 is a schematic diagram illustrating one example of comparison information generated by a handler determination unit according to Embodiment 1.
FIG. 9 is a sequence chart of a first matching process according to Embodiment 1.
FIG. 10 is a flowchart of a first mobile body control server process according to Embodiment 1.
FIG. 11 is a block diagram illustrating the configuration of an information processing system according to Embodiment 2.
FIG. 12 is a schematic diagram illustrating one example of a second table stored in a handler terminal according to Embodiment 2.
FIG. 13 is a sequence chart of a second matching process according to Embodiment 2.
FIG. 14 is a flowchart of a second mobile body control server process according to Embodiment 2.

### DESCRIPTION OF EXEMPLARY EMBODIMENTS

### (Underlying Knowledge Forming Basis of One Aspect of the Present Invention)

Generally, autonomous mobile bodies are driverless; therefore, when there is dirt or damage inside the mobile bodies, it is impossible to make drivers handle the dirt or the damage. Thus, in the case where autonomous mobile bodies are provided to users, it is necessary to assign an appropriate person to handle dirt or damage inside the mobile bodies.

In view of this problem, the inventors repeated diligent examinations and experiments. As a result, the inventors have conceived of an information processing method, an information processing device, and a program according to one aspect of the present disclosure described below by which an appropriate handler can be assigned to handle dirt or damage inside a mobile body.

An information processing method according to one aspect of the present disclosure includes the following executed by a computer: obtaining a result of sensing an interior of a mobile body; performing a recognition process of recognizing at least one of dirt or damage inside the mobile body, based on the result of sensing; determining a handler who handles the at least one of the dirt or the damage inside the mobile body, according to a result of the recognition process; and outputting a notification for the handler to handle the interior of the mobile body.

According to the above information processing method, a handler who handles at least one of dirt and damage inside the mobile body is determined from the result of sensing the interior of the mobile body, and a notification for the determined handler to handle the interior of the mobile body is output. Therefore, it is possible to assign an appropriate handler to handle the dirt or the damage inside the mobile body. In other words, selection of an appropriate handler can be automated. Thus, the dirt or the damage inside the mobile body can be efficiently reduced.

Furthermore, a handler candidate who is capable of handling the dirt or the damage inside the mobile body that has been recognized as the result of the recognition process may be determined as the handler. Thus, a person who is capable of handling the dirt or the damage inside the mobile body can become the handler.

Furthermore, a handler candidate who has time to handle the dirt or the damage inside the mobile body that has been recognized as the result of the recognition process may be determined as the handler. Thus, a person who has time to handle the dirt or the damage inside the mobile body can become the handler.

Furthermore, the travel path or the position of the mobile body and the position of a handler candidate may be obtained, and a handler candidate located in a predetermined range from the travel path or the position may be determined as the handler. Thus, a person who is located in a predetermined range from the travel path or the position of the mobile body can become the handler.

Furthermore, the position of a handling place associated with the handler may be obtained, and the notification may be a travel request for the mobile body to move to the handling place. This makes it possible to cause the mobile body to move to the handling place.

Furthermore, the notification may be a handling request for the handler to handle the mobile body. Thus, the request to handle the mobile body can be sent to the handler.

Furthermore, the position of the mobile body may be obtained, and the notification may include the position of the mobile body. Thus, the handler can be notified of the position of the mobile body.

Furthermore, the position of the handler and the position of the mobile body may be obtained, a handling place may be determined according to the position of the handler and the position of the mobile body, and the notification may include the position of the handling place, a handling request for the handler, and a travel request for the mobile body. Thus, the position of the handling place and the request to handle the mobile body can be sent to the handler, and it is possible to cause the mobile body to move to the handling place.

Furthermore, a recruitment announcement including the condition of the dirt or the damage inside the mobile body that has been recognized as the result of the recognition process and scheduled handling time for handling the dirt or the damage inside the mobile body may be presented to a handler candidate, and a handler candidate who has applied in response to the recruitment announcement may be determined as the handler. Thus, a person who has applied in consideration of the dirt or the damage inside the mobile body and the handling time can become the handler.

Furthermore, the recruitment announcement may include a cost related to handling of the dirt or the damage inside the mobile body that has been recognized as the result of the recognition process. Thus, a person who has applied in consideration of the cost can become the handler.

Furthermore, for each handler candidate, the level of satisfaction of a user of the mobile body handled by the handler candidate in the past may be obtained, and for each handler candidate, a score for the handler candidate may be calculated based on the level of satisfaction, and the handler may be determined by further considering the score for each handler candidate. Thus, the handler can be determined on the basis of the level of satisfaction of the user of the mobile body in handling records in the past.

Furthermore, the handler may be determined according to the level of the dirt or the damage inside the mobile body that has been recognized as the result of the recognition process. Thus, the handler can be determined according to the level of dirt or damage inside the mobile body.

Furthermore, the handler may be determined according to the kind of the dirt or the damage inside the mobile body that has been recognized as the result of the recognition process. Thus, the handler can be determined according to the kind of dirt or damage inside the mobile body.

An information processing device according to one aspect of the present disclosure includes: an obtainer which obtains a result of sensing an interior of a mobile body; a recognition process executor which performs a recognition process of recognizing at least one of dirt or damage inside the mobile body, based on the result of sensing; and a handler determination unit configured to determine a handler who handles the at least one of the dirt or the damage inside the mobile body, according to a result of the recognition process, and output a notification for the handler to handle the interior of the mobile body.

With the above information processing device, a handler who handles at least one of dirt and damage inside the mobile body is determined from the result of sensing the interior of the mobile body, and a notification for the determined handler to handle the interior of the mobile body is output. Therefore, it is possible to assign an appropriate handler to handle the dirt or the damage inside the mobile body.

A program according to one aspect of the present disclosure causes a computer to execute a first process including the following executed by the computer: obtaining a result of sensing an interior of a mobile body; performing a recognition process of recognizing at least one of dirt or damage inside the mobile body, based on the result of sensing; determining a handler who handles the at least one of the dirt or the damage inside the mobile body, according to a result of the recognition process; and outputting a notification for the handler to handle the interior of the mobile body.

With the above program, a handler who handles at least one of dirt and damage inside the mobile body is determined from the result of sensing the interior of the mobile body, and a notification for the determined handler to handle the interior of the mobile body is output. Therefore, it is possible to assign an appropriate handler to handle the dirt or the damage inside the mobile body.

Hereinafter, specific examples of the information processing method, the information processing device, and the program according to one aspect of the present disclosure will be described with reference to the drawings. Each of the embodiments described below shows a specific example of the present disclosure. Thus, the numerical values, shapes, structural elements, and the arrangement and connection of the structural elements, steps, the processing order of the steps etc., shown in the following embodiments are mere examples, and are not intended to limit the present disclosure. Note that the figures are schematic diagrams and are not necessarily precise illustrations.

Note that general and specific aspects of the present disclosure may be implemented using a system, a method, an integrated circuit, a computer program, or a computer-readable recording medium such as a compact disc read-only memory (CD-ROM), or any combination of systems, methods, integrated circuits, computer programs, or recording media.

### EMBODIMENT 1

Hereinafter, an information processing system according to an embodiment will be described. This information processing system manages the operations of a mobile body that transports passengers or freight.

Here, as an example, the mobile body is described as being an autonomous vehicle that is used in ridesharing services, but the mobile body does not necessarily need to be limited to the autonomous vehicle that is used in ridesharing services as long as the mobile body is capable of transporting passengers or freight. Furthermore, there may or may not be a driver or a seat.

### [1-1. Configuration of Information Processing System]

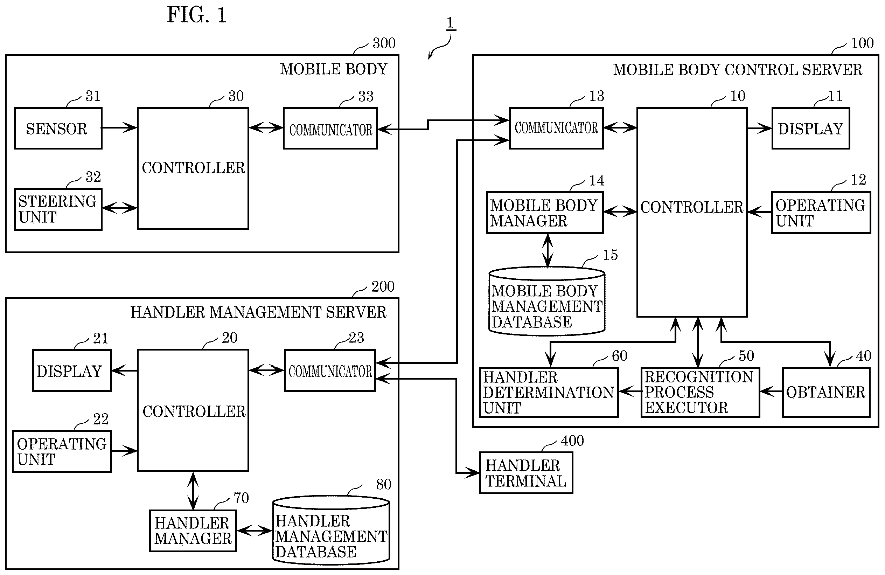

FIG. 1 is a block diagram illustrating the configuration of information processing system 1 according to an embodiment.

As illustrated in FIG. 1, information processing system 1 includes mobile body control server 100, handler management server 200, one or more mobile bodies 300, and one or more handler terminals 400.

Mobile body 300 is an autonomous vehicle that is used in ridesharing services and transports passengers or freight. Although FIG. 1 could be interpreted as if there is one mobile body 300, the number of mobile bodies 300 is not necessarily limited to one and may be two or more.

Mobile body 300 includes controller 30, sensor 31, steering unit 32, and communicator 33.

Sensor 31 performs sensing on the interior of mobile body 300 and outputs sensing information indicating the sensing result. For example, sensor 31 may include an imaging device such as a digital video camera and a digital still camera, capture an image of a seat inside mobile body 300, and output the captured image as the sensing information. Furthermore, for example, sensor 31 may include an odor sensor, sense an odor in the internal space of mobile body 300, and output, as the sensing information, information indicating the sensed odor. Moreover, for example, sensor 31 may include an infrared sensor, measure the surface temperature of a seat inside mobile body 300, and output the measured surface temperature as the sensing information. Furthermore, for example, sensor 31 may include a directional microphone, collect sound inside mobile body 300, and output the collected sound as the sensing information.

Steering unit 32 steers mobile body 300. Steering unit 32 may be, for example, dedicated hardware, or may, for example, include a processor and memory and use the processor to execute a program stored in the memory.

Communicator 33 communicates with other devices having communication capability. The other devices include mobile body control server 100. For example, communicator 33 may include a radio communicator and communicate with other devices by radio.

Controller 30 controls sensor 31, steering unit 32, and communicator 33. Controller 30 may be, for example, dedicated hardware, or may, for example, include a processor and memory and use the processor to execute a program stored in the memory.

Handler management server 200 is a server used by a service company that provides mobile body 300.

Handler management server 200 includes controller 20, display 21, operating unit 22, communicator 23, handler manager 70, and handler management database 80. Handler management server 200 is, for example, a computer including a processor and memory, and may provide various functions by the processor executing a program stored in the memory.

Communicator 23 communicates with other devices having communication capability. The other devices include mobile body control server 100 and handler terminal 400. For example, communicator 23 may include a radio communicator and communicate with other devices by radio.

Display 21 shows an image to a user who is using handler management server 200. For example, display 21 may include a display device such as a liquid-crystal display and show an image on the display device.

Operating unit 22 receives input from a user who is using handler management server 200. For example, operating unit 22 may include an input device such as a keyboard, a mouse, and a touch panel and receive input made by a user using the input device.

Handler management database 80 is a database in which handler information related to a handler who handles dirt or damage inside mobile body 300 is stored. The handler information may include information indicating the reservation status of the handler. Alternatively, handler management database 80 may store, separately from the handler information, the information indicating the reservation status of the handler, instead of including the information indicating the reservation status in the handler information.

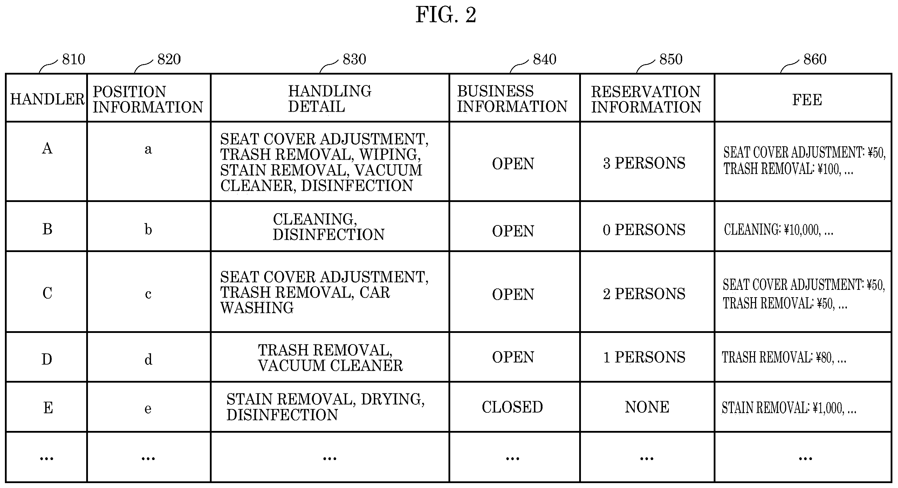

FIG. 2 is a schematic diagram illustrating one example of the handler information stored in handler management database 80.

As illustrated in FIG. 2, the handler information may include handler 810, position information 820, handling details 830, business information 840, reservation information 850, and fee 860 in association, for example. Here, handling means cleaning dirt or repairing damage, and a handler means a cleaning or repair staff member. Handler 810 is information indicating a handler and may indicate the name of the handler and the contact address of the handler, for example. Examples of the contact address include a telephone number, an e-mail address, and an IP address. Position information 820 is information indicating the position of the handler and may indicate a position at which the handler awaits or may indicate the position of a handling place where the handler handles dirt or damage, for example. Handling details 830 are information indicating handling details that the handler is capable of. Business information 840 is information indicating the business status of the handler. Reservation information 850 is information indicating the reservation status of the handler and may indicate the number of people in line, may indicate reservation time, may indicate waiting time, or may indicate available time, for example. The reservation time is start time, end time, or handling time. Furthermore, reservation information 850 may be, for example, information indicating the reservation status for each of handling details indicated in handling details 830. Fee 860 is information indicating a handling fee. Fee 860 may be, for example, information indicating handling time required for handling.

In the case where the handler information or the information indicating the reservation status includes dynamically changing information, the handler information or the information indicating the reservation status may be updated regularly or when the included information changes.

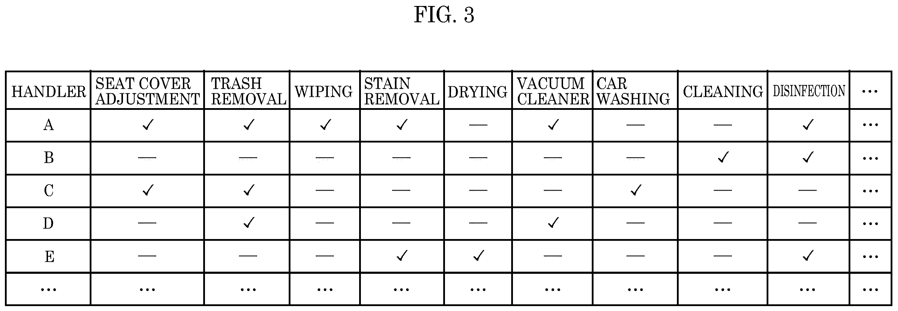

FIG. 3 is a schematic diagram illustrating another example of the handler information stored in handler management database 80.

As illustrated in FIG. 3, the handler information may be, for example, information indicating handling details that each handler is capable of.

Handler manager 70 manages the information stored in handler management database 80.

Handler terminal 400 is a terminal owned by a handler. Handler terminal 400 includes an input device that receives input from the handler and an output device that outputs information (such as an image and sound) to the handler, and communicates with other devices having communication capability. Examples of the input device include a touch panel and a microphone. Examples of the output device include a liquid-crystal display and a loudspeaker. The other devices having communication capability include handler management server 200. Handler terminal 400 may be a smartphone, for example.

Mobile body control server 100 is used by a control company that controls mobile body 300.

Mobile body control server 100 includes controller 10, display 11, operating unit 12, communicator 13, mobile body manager 14, mobile body management database 15, obtainer 40, recognition process executor 50, and handler determination unit 60. Mobile body control server 100 is, for example, a computer including a processor and memory, and may provide various functions by the processor executing a program stored in the memory.

Communicator 13 communicates with other devices having communication capability. The other devices include mobile body 300 and handler management server 200. For example, communicator 13 may include a radio communicator and communicate with other devices by radio.

Display 11 shows an image to a user who is using mobile body control server 100. For example, display 11 may include a display device such as a liquid-crystal display and show an image on the display device.

Operating unit 12 receives input from a user who is using mobile body control server 100 For example, operating unit 12 may include an input device such as a keyboard, a mouse, and a touch panel and receive input made by a user using the input device.

Mobile body management database 15 is a database in which information related to the condition of dirt or damage inside mobile body 300 is stored.

Mobile body manager 14 manages the information stored in mobile body management database 15.

Obtainer 40 obtains a result of sensing the interior of mobile body 300. More specifically, obtainer 40 obtains, as the result of sensing the interior of mobile body 300, the sensing information output from sensor 31 of mobile body 300. In other words, obtainer 40 obtains the sensing information transmitted from communicator 33 of mobile body 300 and received by communicator 13 of mobile body control server 100.

Recognition process executor 50 performs a recognition process of recognizing at least one of dirt and damage inside mobile body 300 on the basis of the result of sensing the interior of mobile body 300 that has been obtained by obtainer 40.

For example, when the sensing information is an image of the interior of mobile body 300, recognition process executor 50 may perform image processing on the image and detect dirt or damage inside mobile body 300. In this case, for example, recognition process executor 50 may detect a difference between an image captured before the entry of a passenger and an image captured after the exit of the passenger, and perform an image recognition process on the detected difference to detect dirt or damage inside mobile body 300. Furthermore, in this case, for example, recognition process executor 50 may perform the image recognition process on the image to identify movement of the passenger on board, and determine the kind of dirt or damage inside mobile body 300 on the basis of the identified movement. For example, when recognition process executor 50 identifies the passenger as having been eating snacks, recognition process executor 50 may determine that the dirt or the damage inside mobile body 300 is snack crumbs. When recognition process executor 50 identifies the passenger as having been drinking a beverage, recognition process executor 50 may determine that the dirt or the damage inside mobile body 300 is a spilled beverage. When recognition process executor 50 identifies the passenger as having been blowing his or her nose, recognition process executor 50 may determine that the dirt or the damage inside mobile body 300 is a facial tissue.

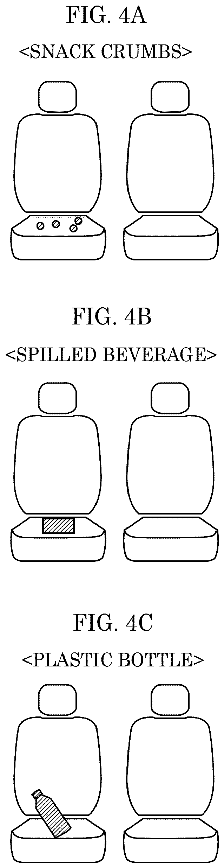

FIG. 4A is a schematic diagram illustrating one example of the interior of mobile body 300 when the kind of dirt or damage inside mobile body 300 is "snack crumbs", FIG. 4B is a schematic diagram illustrating one example of the interior of mobile body 300 when the kind of dirt or damage inside mobile body 300 is "a spilled beverage", and FIG. 4C is a schematic diagram illustrating one example of the interior of mobile body 300 when the kind of dirt or damage inside mobile body 300 is "a plastic bottle".

For example, when the sensing information is information indicating an odor in the internal space of mobile body 300, recognition process executor 50 may detect dirty air inside mobile body 300 on the basis of the information indicating the odor.

For example, when the sensing information is the inner surface temperature of mobile body 300, recognition process executor 50 may detect a wet area inside mobile body 300 on the basis of the inner surface temperature of mobile body 300. For example, a wet area on a seat may be detected.

In the recognition process, recognition process executor 50 may calculate the level of dirt or damage inside mobile body 300, for example.

For example, recognition process executor 50 may identify the number of spots of dirt or damage inside mobile body 300 and calculate the level of the dirt or the damage on the basis of the identified number of spots of dirt or damage. In this case, for example, when the number of spots of dirt or damage is relatively small, recognition process executor 50 may determine the level of the dirt or the damage as "low", when the number of spots of dirt or damage is relatively in the middle range, recognition process executor 50 may determine the level of the dirt or the damage as "middle", and when the number of spots of dirt or damage is relatively large, recognition process executor 50 may determine the level of the dirt or the damage as "high". For example, when the number of spots of dirt or damage is less than or equal to three, recognition process executor 50 may determine the level of the dirt or the damage as "low", when the number of spots of dirt or damage is between four and six, inclusive, recognition process executor 50 may determine the level of the dirt or the damage as "middle", and when the number of spots of dirt or damage is greater than or equal to seven, recognition process executor 50 may determine the level of the dirt or the damage as "high". Here, the number of spots of dirt or damage may be the number of spots of dirt or damage throughout the interior of mobile body 300, may be the number of spots of dirt or damage at a specific location inside mobile body 300, or may be the number of spots of dirt or damage per unit area (in other words, density).

For example, recognition process executor 50 may specify a lapse of time since the interior of mobile body 300 becomes dirty or damaged and calculate the level of the dirt or the damage on the basis of the specified lapse of time. For example, when the dirt or the damage inside mobile body 300 is a spilled beverage, the cleaning time or fee for the spilled beverage increases as time elapses after the beverage is spilled. Therefore, recognition process executor 50 may calculate the level of dirt or damage such that the level of dirt or damage increases with the lapse of time since the interior of mobile body 300 becomes dirty or damaged, for example. For example, when the lapse of time since the interior of mobile body 300 becomes dirty or damaged is less than one hour, recognition process executor 50 may determine the level of the dirt or the damage as "low", when the lapse of time since the interior of mobile body 300 becomes dirty or damaged is at least one hour, but less than three hours, recognition process executor 50 may determine the level of the dirt or the damage as "middle", and when the lapse of time since the interior of mobile body 300 becomes dirty or damaged is at least three hours, recognition process executor 50 may determine the level of the dirt or the damage as "high".

For example, recognition process executor 50 may identify the kind of dirt or damage inside mobile body 300 and calculate the level of the dirt or the damage on the basis of the number of identified kinds of dirt or damage. In this case, for example, when the number of kinds of dirt or damage is one, recognition process executor 50 may determine the level of the dirt or the damage as "low", when the number of kinds of dirt or damage is two, recognition process executor 50 may determine the level of the dirt or the damage as "middle", and when the number of kinds of dirt or damage is three or more, recognition process executor 50 may determine the level of the dirt or the damage as "high".

For example, recognition process executor 50 may identify the kind of dirt or damage inside mobile body 300, specify a handling method corresponding the identified kind of the dirt or the damage, and calculate the level of the dirt or the damage on the basis of the specified handling method. In this case, for example, when the number of handling methods is one, recognition process executor 50 may determine the level of the dirt or the damage as "low", when the number of handling methods is two, recognition process executor 50 may determine the level of the dirt or the damage as "middle", and when the number of handling methods is three or more, recognition process executor 50 may determine the level of the dirt or the damage as "high". In this case, for example, recognition process executor 50 may store a table in which the kind of dirt or damage and the handling method are associated with each other, refer to the stored table, and specify the handling method corresponding to the identified kind of the dirt or the damage.

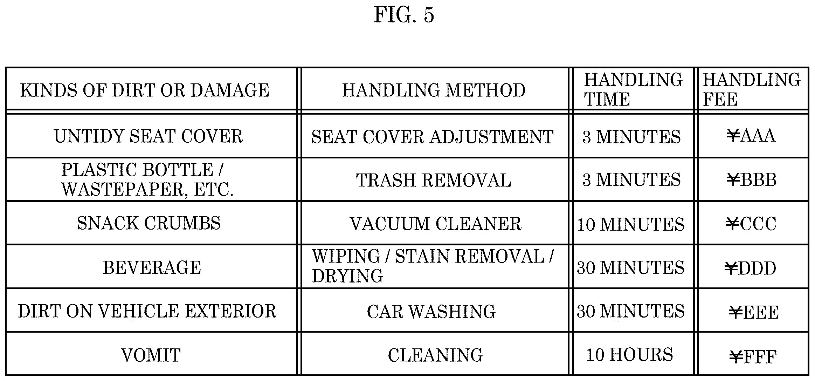

FIG. 5 is a schematic diagram illustrating one example of the table stored in recognition processing executor 50.

For example, recognition process executor 50 may identify the kind of dirt or damage inside mobile body 300, specify a handling cost for handling the dirt or the damage according to the identified kind of the dirt or the damage, and calculate the level of the dirt or the damage on the basis of the specified handling cost. The handling cost is, for example, handling time or a handling fee. In this case, for example, in the case where the handling cost is handling time, when the handling time is less than ten minutes, recognition process executor 50 may determine the level of the dirt or the damage as "low", when the handling time is at least ten minutes, but less than one hour, recognition process executor 50 may determine the level of the dirt or the damage as "middle", and when the handling time is at least one hour, recognition process executor 50 may determine the level of the dirt or the damage as "high". Furthermore, in this case, for example, recognition process executor 50 may store a table in which the kind of dirt or damage and the handling time or handling method are associated with each other, refer to the stored table, and specify the handling method according to the identified kind of the dirt or the damage. One example of the table to be stored may be the table illustrated in FIG. 3. The handling time and the handling fee may be preset values, may be values calculated from previous records, or may be values obtained from an external business partner, etc.

For example, recognition process executor 50 may identify the percentage of a dirt or damage range in a predetermined area inside mobile body 300 and calculate the level of the dirt or the damage on the basis of the identified percentage of the dirt or the damage. In this case, for example, when the percentage of the dirt or damage range is less than 10%, recognition process executor 50 may determine the level of the dirt or the damage as "low", when the percentage of the dirt or damage range is at least 10%, but less than 30%, recognition process executor 50 may determine the level of the dirt or the damage as "middle", and the percentage of the dirt or damage range is at least 30%, recognition process executor 50 may determine the level of the dirt or the damage as "high".

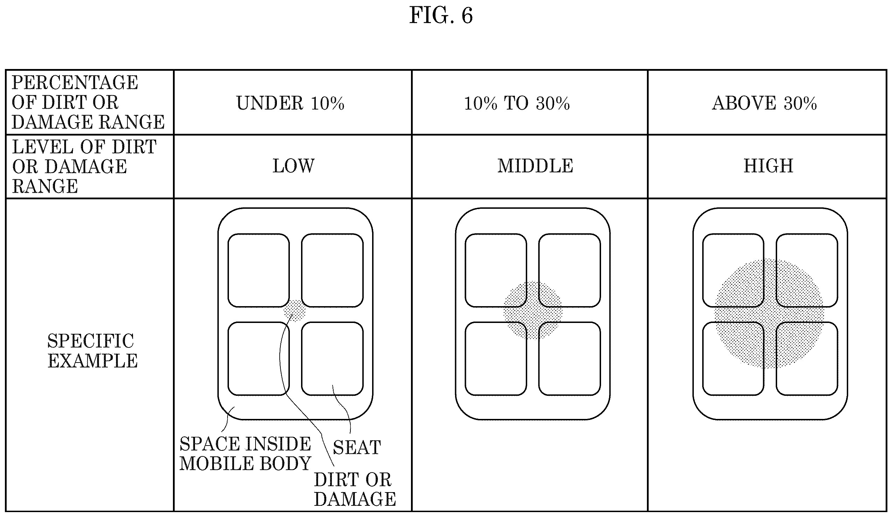

FIG. 6 is a schematic diagram illustrating one specific example of the percentages of the dirt or damage range in the predetermined area inside mobile body 300.

Here, because dirt or damage may be concentrated on one location or dispersed across multiple locations inside mobile body 300, recognition process executor 50 may determine a usable range in the predetermined area inside mobile body 300 from the position of the dirt or the damage and calculate the level of the dirt according to the percentage of the determined usable range, for example. As an example of the usable range in the predetermined area inside mobile body 300, a region located within a predetermined range from the position of each dirt or damage may be set as a non-usable range while the region other than the non-usable range in the predetermined area may be set as a usable range.

Recognition process executor 50 may calculate the level of dirt or damage by combining the aforementioned calculations of the level of dirt or damage.

For example, recognition process executor 50 may calculate the level of dirt or damage at each location inside mobile body 300.

For example, recognition process executor 50 may calculate the level of dirt or damage in the entire area inside mobile body 300 depending on the level of dirt or damage at each location inside mobile body 300. Recognition process executor 50 may change the level of dirt or damage at each location inside mobile body 300 into numerical form and determine the total of these numerical values as the level of dirt or damage in the entire area inside mobile body 300, for example. Furthermore, recognition process executor 50 may determine the highest value of the level of dirt or damage at each location inside mobile body 300 as the level of dirt or damage in the entire area inside mobile body 300, for example. Moreover, recognition process executor 50 may change the level of dirt or damage at each location inside mobile body 300 into numerical form and determine the highest value of the totals of the numerical values of respective parts inside mobile body 300 as the level of dirt or damage in the entire area inside mobile body 300, for example. Examples of these parts include a seat, the floor, and a window. Furthermore, recognition process executor 50 may change the level of dirt or damage at each location inside mobile body 300 into numerical form and determine the average of these numerical values as the level of dirt or damage in the entire area inside mobile body 300, for example.

Recognition process executor 50 may further detect dirt or damage on the exterior of mobile body 300 on the basis of information obtained by a device provided outside mobile body 300, for example. For example, the information is an image captured by a surveillance camera installed in a garage where mobile body 300 is stored or an image captured by an onboard camera on a mobile body different from mobile body 300.

Furthermore, recognition process executor 50 determines handling timing for handling at least one of dirt and damage inside mobile body 300.

For example, when recognition process executor 50 determines that the level of dirt or damage inside mobile body 300 exceeds a predetermined threshold value, recognition process executor 50 may determine that this is the handling timing. Furthermore, for example, when mobile body control server 100 receives, from a user who is using mobile body control server 100, a handling instruction to handle dirt or damage inside mobile body 300, recognition process executor 50 may determine that this is the handling timing. Moreover, for example, in the case where there are two or more mobile bodies 300, recognition process executor 50 may determine the handing timing for one mobile body 300 according to comparison between the level of dirt or damage in one mobile body 300 and the level of dirt or damage in another mobile body 300.

According to the result of the recognition process performed by recognition process executor 50, handler determination unit 60 determines a handler who handles at least one of dirt and damage inside mobile body 300.

For example, handler determination unit 60 may determine, as the handler, a handler candidate who is capable of handling dirt or damage inside mobile body 300 that has been recognized as a result of the recognition process performed by recognition process executor 50. In this case, for example, handler determination unit 60 may determine handling details by referring to the condition of dirt or damage inside mobile body 300 that has been recognized as a result of the recognition process performed by recognition process executor 50, and determine, as the handler, a handler candidate who is able to deal with the determined handling details. At this time, handler determination unit 60 may store a table (hereinafter also referred to as the "first table") in which the kind of dirt or damage inside mobile body 300, the level of dirt or damage inside mobile body 300, and handling details for dirt or damage inside mobile body 300 are associated with one another, and determine the handling details with reference to the first table stored, for example.

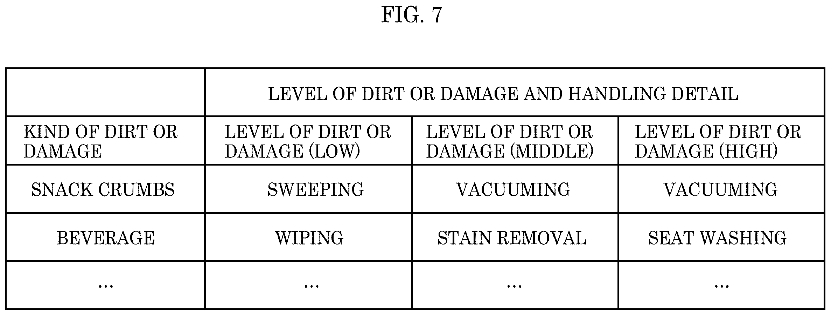

FIG. 7 is a schematic diagram illustrating one example of the first table stored in handler determination unit 60.

In the case where the first table illustrated in FIG. 7 is stored in handler determination unit 60, when the kind of dirt or damage inside mobile body 300 that has been recognized as a result of the recognition process performed by recognition process executor 50 is "snack crumbs" and the level of the dirt or the damage is "middle", handler determination unit 60 may determine the handing details as "vacuuming" with reference to the first table.

When the handling details are determined, handler determination unit 60 may refer to the handler information stored in handler management database 80 and determine a handler from among persons who are capable of the determined handling details. For example, in the case where the handler information illustrated in FIG. 3 is stored in handler management database 80, when the handling details are determined as "trash removal", handler determination unit 60 may determine the handler from among handler A, handler C, and handler D.

When the handling details are determined and there are two or more handler candidates who are capable of the determined handling details, handler determination unit 60 may determine, as the handler, a handler candidate who meets a predetermined condition. In this case, handler determination unit 60 may generate comparison information in which the conditions for the respective handler candidates can be compared with each other, refer to the generated comparison information, and determine, as the handler, a handler candidate who meets a predetermined condition, for example.

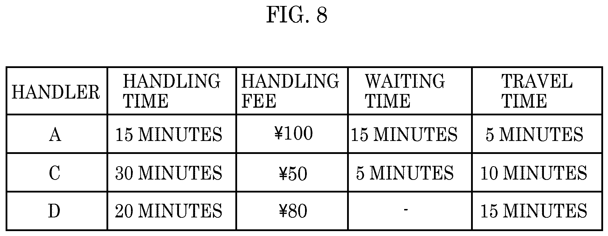

FIG. 8 is a schematic diagram illustrating one example of comparison information generated by handler determination unit 60.

In the case where handler determination unit 60 generates the comparison information illustrated in FIG. 8, when the predetermined condition is that "the handling time is shortest", handler A may be determined as the handler. When the predetermined condition is that "the handling fee is lowest", handler C may be determined as the handler. When the predetermined condition is that "there is no waiting time", handler D may be determined as the handler. When the predetermined condition is that "the travel time is shortest", handler A may be determined as the handler. Note that the predetermined condition is not limited to these examples; any condition is applicable as long as the condition relates to handling.

Because there is not always a handler capable of all handling details, handler determination unit 60 may determine a handling detail to be given a priority according to the kind or level of dirt or damage inside mobile body 300, and determine, as the handler, a handler candidate who is capable of the handling detail to be given a priority. For example, handler determination unit 60 may determine, as the handling detail to be given a priority, dirt or damage that is relatively high in the level of dirt or damage. Consequently, the service restriction on mobile body 300 the service of which is restricted due to a relatively high dirt or damage level can be lifted relatively soon. Furthermore, for example, handler determination unit 60 may determine, as the handling detail to be given a priority, dirt or damage that is handled in a relatively short time. Consequently, the service restriction on mobile body 300 the service of which is restricted due to there being two or more spots of dirt or damage in substantially the same level can be lifted relatively soon. The handling detail to be given a priority can be set by a user who is using information processing system 1. Note that the handling detail to be given a priority may be changed according to circumstances. For example, the handling detail to be given a priority may be different in the case where there are two or more spots of dirt or damage in different dirt or damage levels and in the case where there are two or more spots of dirt or damage in substantially the same dirt or damage level. Furthermore, for example, handler determination unit 60 may determine, as the handling detail to be given a priority, a handling detail that can relatively significantly improve the level of dirt or damage.

Handler determination unit 60 may determine, as the handling detail to be given a priority, a handling detail that as a result of handing dirt or damage, enables the level of dirt or damage inside mobile body 300 to fall below the predetermined threshold value mentioned above. This makes it possible to increase the service availability rate for mobile body 300. In particular, this is useful during the season. Furthermore, handler determination unit 60 may determine that the level of dirt or damage below the predetermined threshold value mentioned above is not the handling detail to be given a priority. This makes it possible to increase the service availability rate for mobile body 300. In particular, this is useful during the season.

Because there is not always a handler capable of all handling details, handler determination unit 60 may determine two or more handlers who take care of different handling details, for example.

Handler determination unit 60 may change dirt or damage subject to handling according to the season or the off-season, for example. For example, handler determination unit 60 may limit the dirt or the damage subject to handling to dirt or damage that is "high" in the dirt or damage level and/or is handled in "less than 10 minutes" during the season, and not limit the dirt or the damage subject to handling during the off-season. The season and the off-season may be determined, for example, on the basis of preset time, event information, climate information, previous mobile body usage request records, and the like.

In the case where there are two or more mobile bodies 300, handler determination unit 60 may change the dirt or the damage subject to handling, for example, on the basis of the vacancy of mobile body 300 that is available.

For example, handler determination unit 60 may determine, as the handler, a handler candidate who addresses, in a handling place, the dirt or the damage inside mobile body 300 or may determine, as the handler, a handler candidate who comes into mobile body 300 and addresses the dirt or the damage inside mobile body 300. In the case where a handler candidate who comes into mobile body 300 and addresses the dirt or the damage inside mobile body 300 is determined as the handler, for example, handler determination unit 60 may determine, as the handler, a handler candidate who is able to address the dirt or the damage during a travel period in which mobile body 300 moves from a place where one service ends to a place where the next service starts. In this case, for example, handler determination unit 60 may obtain the travel path or the position of mobile body 300 and the positions of the handler candidates and determine, as the handler, a handler candidate who is located in a predetermined range from the travel path or the position of mobile body 300. Furthermore, in this case, handler determination unit 60 may determine, as the handler, a handler candidate located farthest from the place where the next service starts. This makes it possible to lengthen the handling period for the handler.

Handler determination unit 60 may determine, as the handler, a handler candidate who has time to handle dirt or damage inside mobile body 300 that has been recognized as a result of the recognition process performed by recognition process executor 50, for example. In this case, for example, when the handling time can be predicted in advance or when the handling time has been determined in advance, handler determination unit 60 may determine, as the handler, a handler candidate who is able to handle the dirt or the damage in the predicted or determined handling time.

Handler determination unit 60 may determine the handler according to the level of dirt or damage inside mobile body 300 that has been recognized as a result of the recognition process performed by recognition process executor 50, for example.

Handler determination unit 60 may determine the handler according to the kind of dirt or damage inside mobile body 300 that has been recognized as a result of the recognition process performed by recognition process executor 50, for example.

When the handler is determined, handler determination unit 60 outputs a notification for the determined handler to handle the situation inside mobile body 300. For example, handler determination unit 60 may obtain the position of a handling place associated with the handler, and the notification may be a request to move to the handling place for mobile body 300. Alternatively, the notification may be a handling request for the handler to handle mobile body 300. In this case, handler determination unit 60 may obtain the position of mobile body 300, and the notification may include the position of mobile body 300. For example, handler determination unit 60 may obtain the position of the handler and the position of mobile body 300 an determine the handling place according to the obtained positions of the handler and the mobile body. The notification may include, for example, the position of the determined handling place, the handling request for the handler, and the travel request for mobile body 300.

Controller 10 controls display 11, operating unit 12, communicator 13, mobile body manager 14, obtainer 40, recognition process executor 50, handler determination unit 60, and handler manager 70.

### [1-2. Operations of Information Processing System]

Operations performed by information processing system 1 having the above-described configuration will be described below.

Information processing system 1 performs a first matching process as one example.

The first matching process is a process in which mobile body control server 100 determines, according to the result of sensing the interior of mobile body 300, a handler who handles at least one of dirt and damage inside mobile body 300.

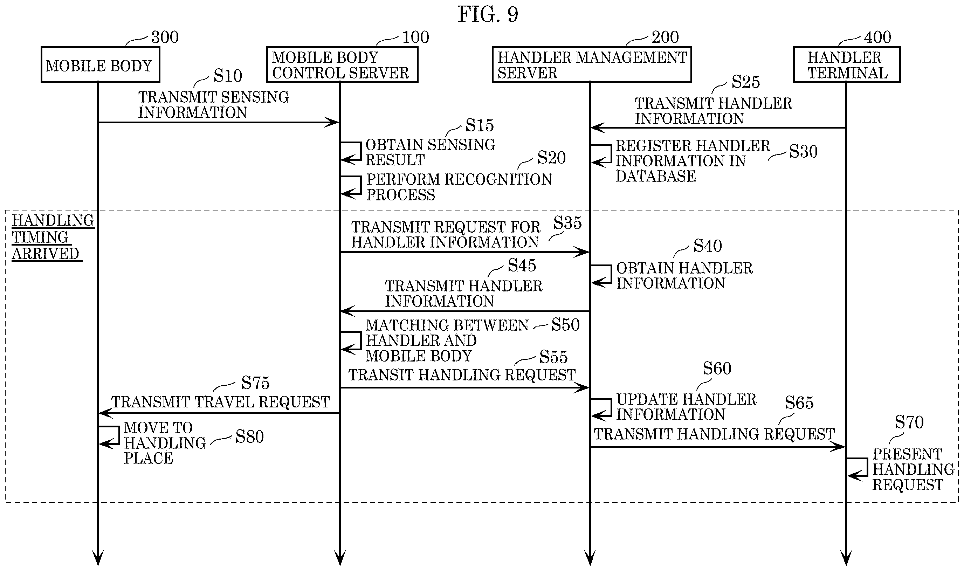

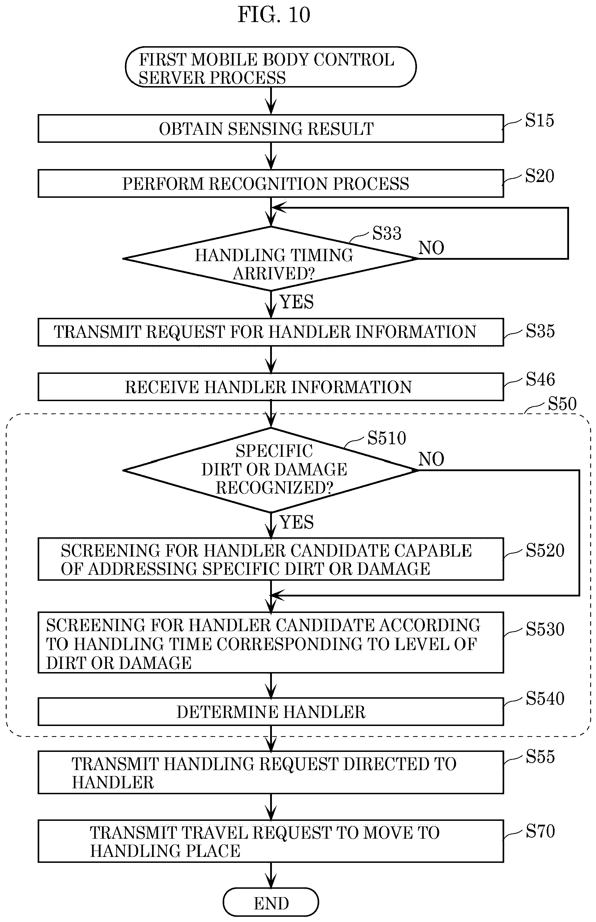

Hereinafter, the first matching process will be described with reference to FIG. 9 and FIG. 10.

FIG. 9 is a sequence chart of the first matching process.

FIG. 10 is a flowchart of a process which mobile body control server 100 performs (hereinafter also referred to as the "first mobile body control server process") in the first matching process.

In mobile body 300, sensor 31 senses the interior of mobile body 300 and outputs sensing information indicating the sensing result. Furthermore, communicator 33 transmits, to mobile body control server 100, the sensing information output from sensor 31 (Step S10).

When the sensing information is transmitted, communicator 13 in mobile body control server 100 receives the sensing information. When the sensing information is received, obtainer 40 obtains, as the result of sensing the interior of mobile body 300, the sensing information received by communicator 13 (Step S15). When the sensing result is obtained, recognition process executor 50 performs a recognition process of recognizing at least one of dirt and damage inside mobile body 300 on the basis of the obtained sensing result (Step S20). Subsequently, recognition process executor 50 determines handling timing.

Meanwhile, handler terminal 400 transmits the handler information to handler management server 200 (Step S25).

When the handler information is transmitted, communicator 23 in handler management server 200 receives the handler information. When the handler information is received, handler manager 70 registers, in handler management database 80, the handler information received by communicator 23 (Step S30).

In mobile body control server 100, when the handling timing has arrived (YES in Step S33 after repetition of NO in Step S33 (refer to FIG. 10)), communicator 13 transmits a request for handler information to handler management server 200 (Step S35).

When the request for handler information is transmitted, communicator 23 in handler management server 200 receives the request for handler information. When the request for handler information is received, handler manager 70 obtains, from handler management database 80, the handler information corresponding to the request for handler information received by communicator 23 (Step S40). Subsequently, communicator 23 transmits, to mobile body control server 100, the handler information obtained by handler manager 70 (Step S45).

When the handler information is transmitted, communicator 13 in mobile body control server 100 receives the handler information (Step S46). Subsequently, handler determination unit 60 performs matching between a handler and mobile body 300 using the handler information received by communicator 13 and the result of the recognition process performed by recognition process executor 50 (Step S50).

More specifically, the process in Step S50 is to determine a handler who handles at least one of dirt and damage inside mobile body 300 and includes the processes in Step S510 to Step S540 illustrated in FIG. 10.

When the process in Step S50 starts, handler determination unit 60 checks whether or not specific dirt or damage has been recognized as a result of the recognition process performed by recognition process executor 50 (Step S510).

When the specific dirt or damage has been recognized in the process in Step S510 (YES in Step S510), handler determination unit 60 identifies, by screening the handler candidates indicated in the handler information, a handler candidate capable of addressing the specific dirt or damage that has been recognized (Step S520). Furthermore, handler determination unit 60 screens the handler candidates according to the handling time corresponding to the level of dirt or damage that has been recognized as a result of the recognition process performed by recognition process executor 50 (Step S530).

When the specific dirt or damage has not been recognized in the process in Step S510 (NO in Step S510), handler determination unit 60 skips the process in Step S520 and performs the process in Step S530.

When the handler candidates are screened in the process in Step S530, handler determination unit 60 determines a handler from among the screened handler candidates (Step S540). Handler determination unit 60 outputs, as the notification for the determined handler to handle the interior of mobile body 300, a handling request for the determined handler to handle mobile body 300 and a travel request for mobile body 300 to move to the handling place.

When the handling request is output, communicator 13 in mobile body control server 100 transmits the handling request to handler control server 200 (Step S55).

When the handling request is transmitted, communicator 23 in handler management server 200 receives the handling request. Subsequently, handler manager 70 updates handler management database 80 with the content of the handling request received by communicator 23 (Step S60). Communicator 23 transmits the handling request to handler terminal 400 of the handler to which the handling request is to be directed (Step S65). Handler terminal 400 receives the transmitted handling request and presents the received handling request to a user who uses handler terminal 400 (Step S70).

Meanwhile, when the travel request for mobile body 300 to move to the handling place is output, communicator 13 in mobile body control server 100 transmits the travel request to mobile body 300 (Step S75).

When the travel request is transmitted, communicator 33 in mobile body 300 receives the travel request. Subsequently, in response to the travel request, steering unit 32 causes mobile body 300 to move to the handling place (Step S80).

### [1-3. Review]

As described above, according to information processing system 1, a handler who handles at least one of dirt and damage inside mobile body 300 is determined from the result of sensing the interior of mobile body 300, and a notification for the determined handler to handle the interior of mobile body 300 is output. Therefore, it is possible to assign an appropriate handler to handle the dirt or the damage inside mobile body 300.

### EMBODIMENT 2

Hereinafter, an information processing system according to Embodiment 2 obtained by changing a portion of the configuration of information processing system 1 according to Embodiment 1 will be described.

### [2-1. Configuration of Information Processing System]

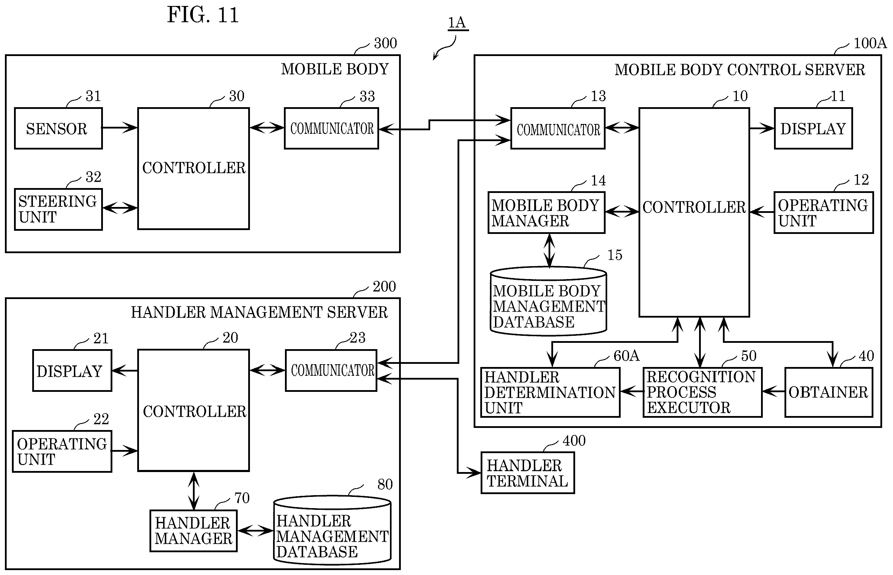

FIG. 11 is a block diagram illustrating the configuration of information processing system 1A according to Embodiment 2. Hereinafter, structural elements of information processing system 1A that are the same as or similar to those of information processing system 1 according to Embodiment 1 will be assigned the same reference marks and detailed explanations thereof will be omitted assuming that the explanations have already been provided; the following description focuses on the points of difference from information processing system 1.

As illustrated in FIG. 11, information processing system 1A results from changing information processing system 1 according to Embodiment 1 by replacing mobile body control server 100 and handler terminal 400 by mobile body control server 100A and handler terminal 400A, respectively. Mobile body control server 100A results from changing mobile body control server 100 by replacing handler determination unit 60 by handler determination unit 60A.

According to the result of the recognition process performed by recognition process executor 50, handler determination unit 60A determines a handler who handles at least one of dirt and damage inside mobile body 300. More specifically, handler determination unit 60A presents, to handler candidates, a recruitment announcement including the condition of dirt or damage inside mobile body 300 that has been recognized as a result of the recognition process, and scheduled handling time for the dirt or the damage inside mobile body 300, and determines, as the handler, a handler candidate who has applied in response to the presented recruitment announcement. Here, when handler determination unit 60A generates the recruitment announcement, communicator 13 transmits the generated recruitment announcement to handler terminal 400 owned by the handler candidate via handler management server 200. Subsequently, when communicator 13 receives, via handler management server 200, an application including availability information transmitted from handler terminal 400 in response to the transmitted recruitment announcement, handler determination unit 60A determines a handler from among handler candidates who have applied on the basis of the availability information included in the received application.

Here, the condition of dirt or damage may be, for example, the kind of dirt or damage, the location of dirt or damage, the material at the location of dirt or damage, or the level of dirt or damage each of which has been recognized as a result of the recognition process. Examples of the kind of dirt include snack crumbs, a spilled beverage, and a plastic bottle, and examples of the kind of damage include fraying of the fabric of a seat and a hole in a seat. Examples of the location of dirt or damage include a seat, the floor, a window, and the exterior of mobile body 300. Examples of the material at the location of dirt or damage include leather, cloth, wood, and plastic. Examples of the level of dirt or damage include low, middle, and high. The level of dirt or damage may include, for example, a rule for determining the level of dirt or damage. Examples of this rule include time elapsed after the dirt or the damage occurs. In the case where there are two or more rules for determining the level of dirt or damage, the level of dirt or damage may include these two or more rules. Furthermore, the level of dirt or damage may include the kind of a sensor for sensing the interior of mobile body 300 and information about sensing. The information about sensing may be, for example, information about a sensing value or sensing time or location. The information about sensing time or location is, for example, imaging time included in imaging information obtained when an image is captured or information of a position at which the image is captured.

For example, handler determination unit 60A may determine scheduled handling time on the basis of the next service start time determined in advance according to an operation plan for mobile body 300. In this case, for example, when the next service start time is determined as 16:00, handler determination unit 60A may determine that the scheduled handling time is until 16:00. In this case, since the scheduled handling time is not determined on the basis of the handling time for handling dirt or damage, the entire handling is not always completed within the scheduled handling time. Therefore, handler determination unit 60A may select a handling detail or may give a priority to a handling detail. When a handling detail is selected or the priority is given to a handling detail, information indicating the selected handling detail or information indicating the priority given to the handling detail needs to be included in the scheduled handling time. For example, dirt or damage in a higher level may be selected. Furthermore, for example, dirt or damage the level of which exceeds a threshold value or is relatively close to a threshold value may be selected. Furthermore, for example, dirt or damage in a higher level may be given a higher priority. Furthermore, for example, a handling detail that needs to be handled sooner may be given a higher priority.

Handler determination unit 60A may determine the scheduled handling time, for example, on the basis of dirt or damage recognized as a result of the recognition process. For example, when dirt or damage that requires two hours to handle is recognized as a result of the recognition process, handler determination unit 60A may determine, as the scheduled handling time, two hours after the start of handling. In this case as well, handler determination unit 60A may select a handling detail or may give a priority to a handling detail.

Handler determination unit 60A may determine the scheduled handling time, for example, on the basis of a predetermined period allocated in advance to handle dirt or damage. For example, when the predetermined period allocated in advance to handle dirt or damage is two hours including a travel period for handling, handler determination unit 60A may determine, as the scheduled handling time, two hours after the start of travel for handling. In this case as well, handler determination unit 60A may select a handling detail or may give a priority to a handling detail.

A specific example of the scheduled handling time may be, for example, handling start time. In this case, the scheduled handling time may be information indicating that the handling start time is before 14:00 or may be information indicating that the handling start time is between 14:00 and 14:30, for example. A specific example of the scheduled handling time may be, for example, handling end time. In this case, the scheduled handling time may be information indicating that the handling end time is before 15:00 or may be information indicating that the handling end time is between 14:30 and 15:00, for example. A specific example of the scheduled handling time may be, for example, a handling period. In this case, the scheduled handling time may be information indicating that the period between the start of handling and the end of handling is between 14:00 and 15:00, for example. A specific example of the scheduled handling time may be, for example, time of arrival at a scheduled destination after completion of handling. In this case, the scheduled handling time may be information indicating that the time of arrival at the scheduled destination after completion of handling is before 16:00, for example. Examples of the time of arrival include the next service start time and the waiting start time. When the scheduled handling time is the time of arrival at the scheduled destination after completion of handling, the scheduled handling time needs to include information indicating the location or area of the destination. This allows an applicant who responds to the recruitment announcement to take the travel time to move to the destination into consideration upon applying. A specific example of the scheduled handling time may be, for example, information indicating that handling is required as soon as possible. In this case, an applicant may apply with information indicating the handling time.

The recruitment announcement may also include, for example, a cost related to handling of dirt or damage inside mobile body 300 that has been recognized as a result of the recognition process. Specific examples of the cost may include information indicating the range of handling fees, information indicating the lower limit of the handling fees, and information indicating the upper limit of the handling fees. This makes it possible to request handling under a predetermined charge.

The recruitment announcement may also include, for example, information related to a desired area for handling. This makes it possible to send a handling request to a handler located within a predetermined area.

The recruitment announcement may also include, for example, information related to dirt or damage to be handled. The information related to dirt or damage to be handled may be, for example, information indicating dirt or damage to be handled or information indicating dirt or damage not to be handled. This makes it possible to request that only dirt or damage in a relatively high dirt or damage level be handled or request that dirt or damage in a relatively low dirt or damage level not be handled. Furthermore, it is possible to increase the availability rate for mobile body 300 by requesting that only dirt or damage in a relatively high dirt or damage level be handled or requesting that dirt or damage in a relatively low dirt or damage level not be handled, for example, during the season.

The recruitment announcement may also include, for example, information related to dirt or damage that is always required to be handled or information related to dirt or damage that is not always required to be handled. This makes it possible to prioritize the dirt or the damage that is always required to be handled while handling, to the extent possible, the dirt or the damage that is not always required to be handled when the handling time is limited according to the operation plan for mobile body 300. Examples of the dirt or the damage that is always required to be handled may include dirt or damage in a "high" dirt or damage level and dirt or damage in a dirt or damage level that exceeds a predetermined threshold value.

The recruitment announcement may also include, for example, information related to the type of a mobile body. This allows an applicant to take the features of the mobile body into consideration upon applying.

The recruitment announcement may also include, for example, information related to the current position of a mobile body. This allows an applicant to estimate the time of arrival of the mobile body at the handling place and calculate handling time that can be spent by the applicant him/herself. In this case, the recruitment announcement may further include, for example, scheduled time of departure to the handling place and the position of the mobile body at that time.

When communicator 13 receives an application including the availability information, handler determination unit 60A performs matching between a handler candidate who has applied and mobile body 300 on the basis of the availability information included in the received application. Subsequently, on the basis of the result of matching, handler determination unit 60A determines a handler from among handler candidates who have applied.

The availability information may include, for example, information indicating whether or not handling is possible, information indicating the handling place, information indicating the handling time, information indicating the handling details, or information indicating the handling fee. Examples of the handling time include scheduled handling start time, scheduled handling end time, and a handling period. The handling details are details that can be handled or details that cannot be handled, for example.

Handler determination unit 60A may store a predetermined condition and determine a handler on the basis of the availability information using the predetermined condition stored, for example.

Examples of the predetermined condition include the condition that the handling fee is lowest, the condition that the handling time is shortest, the condition that the total of required handling time including the travel time is shortest, and the condition that more spots of dirt or damage can be handled.

Handler determination unit 60A may further obtain, for each handler candidate, the level of satisfaction of a user of mobile body 300 handled by the handler candidate in the past, calculate, for each handler candidate, a score for the handler candidate on the basis of the obtained level of satisfaction, and determine a handler by also considering the score for each handler candidate.

Handler terminal 400A is a terminal owned by a handler. Handler terminal 400A includes an input device that receives input from the handler and an output device that outputs information to the handler, and communicates other devices having communication capability. Examples of the input device include a touch panel and a microphone. The output device is, for example, a device such as a liquid-crystal display and a loudspeaker that outputs an image, sound, and the like. The other devices having communication capability include handler management server 200. Handler terminal 400A may be a smartphone, for example.

When handler terminal 400A receives the recruitment announcement from handler management server 200, handler terminal 400A generates an application including the availability information in response to the received recruitment announcement and transmits the generated application to handler management server 200.

For example, when handler terminal 400A receives the recruitment announcement from handler management server 200, handler terminal 400A may present the content of the recruitment announcement to a user who is using handler terminal 400A, receive input of the availability information from the user in response to the presentation, and generate an application including the availability information on the basis of the received input.

For example, when handler terminal 400A receives the recruitment announcement from handler management server 200, handler terminal 400A determines whether or not handling is possible on the basis of the condition of dirt or damage inside mobile body 300 and the scheduled handling time for the dirt or the damage inside mobile body 300 that are included in the recruitment announcement. Furthermore, handler terminal 400A may generate an application including the availability information on the basis of the result of the determination. In this case, handler terminal 400A may store a table (hereinafter also referred to as the "second table") in which the level of dirt or damage inside mobile body 300 and the handling time for handling the dirt or the damage inside mobile body 300 are associated with each another, and determine whether or not handing is possible with reference to the second table stored, for example.

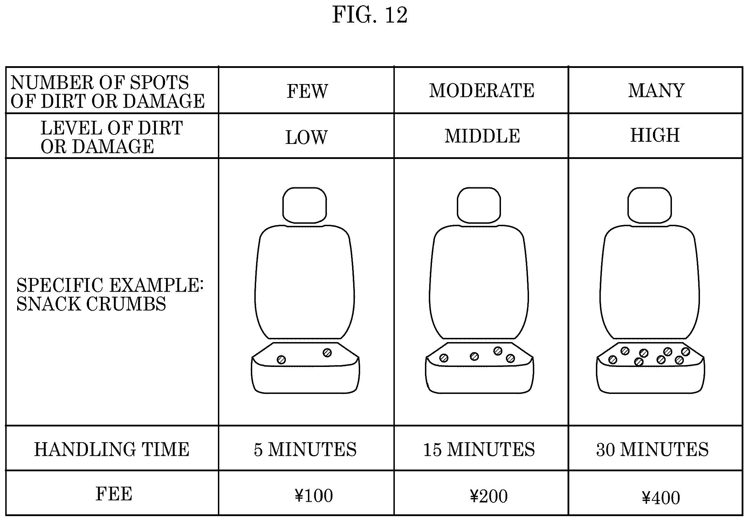

FIG. 12 is a schematic diagram illustrating one example of the second table stored in handler terminal 400A.

In the case where the second table illustrated in FIG. 12 is stored, when handler terminal 400A receives the recruitment announcement, handler terminal 400A refers to the second table and calculates, from the level of dirt or damage inside mobile body 300 that is included in the recruitment announcement, the handling time for handling the dirt or the damage. Handler terminal 400A determines whether or not the calculated handling time is within the scheduled handling time for dirt or damage inside mobile body 300 that is included in the recruitment announcement. When handler terminal 400A determines that the calculated handling time is within the scheduled handling time, handler terminal 400A may determine that handling is possible, and when handler terminal 400A determines that the calculated handling time is not within the scheduled handling time, handler terminal 400A may determine that handling is not possible.

For example, handler terminal 400A may store a table in which the kind of dirt or damage inside mobile body 300 and the handling time for handling dirt or damage inside mobile body 300 are associated with each other, refer to the stored table, and determine whether or not handling is possible. Furthermore, for example, handler terminal 400A may store a table in which the location of dirt or damage inside mobile body 300 and the handling time for handling dirt or damage inside mobile body 300 are associated with each other, refer to the stored table, and determine whether or not handling is possible. Furthermore, for example, handler terminal 400A may store a table in which the location of dirt or damage inside mobile body 300 and the handling time for handling dirt or damage inside mobile body 300 are associated with each other, refer to the stored table, and determine whether or not handling is possible. Furthermore, for example, handler terminal 400A may store a table in which the material at the location of dirt or damage inside mobile body 300 and the handling time for handling dirt or damage inside mobile body 300 are associated with each other, refer to the stored table, and determine whether or not handling is possible.

### [2-2. Operations of Information Processing System]

Operations performed by information processing system 1A having the above-described configuration will be described below.

Information processing system 1A performs a second matching process as one example.

The second matching process is a process in which mobile body control server 100A posts a recruitment announcement for a handler who handles at least one of dirt and damage inside mobile body 300 according to the result of sensing the interior of mobile body 300 and determines a handler from among applicants who respond to the recruitment announcement.

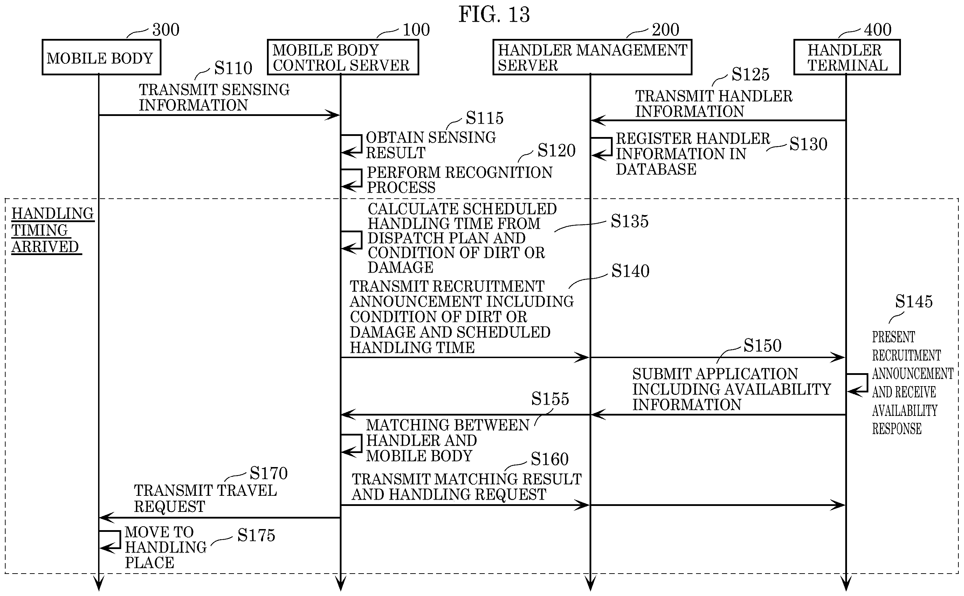

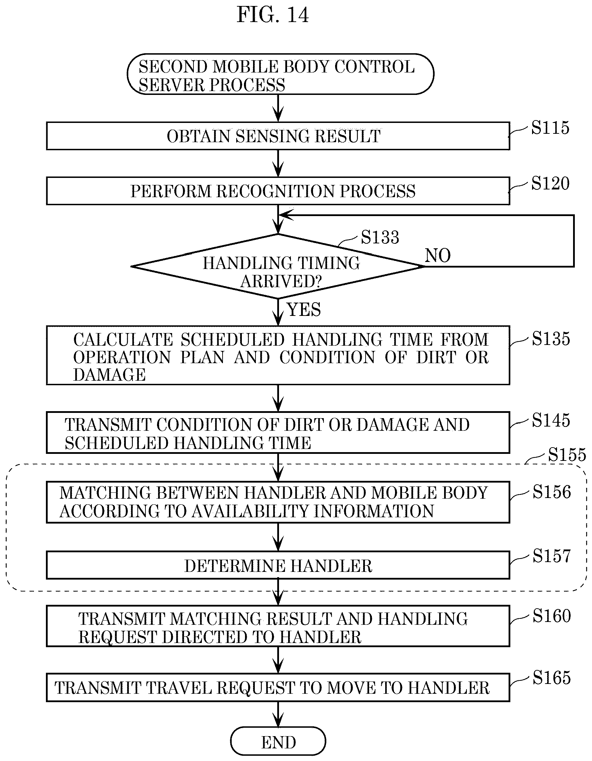

Hereinafter, the second matching process will be described with reference to FIG. 13 and FIG. 14.

FIG. 13 is a sequence chart of the second matching process.

FIG. 14 is a flowchart of a process which mobile body control server 100A performs (hereinafter also referred to as the "second mobile body control server process") in the second matching process.

In the second matching process, the processes in Step S110 to Step S130 (refer to FIG. 13 and FIG. 14) and the process in Step S133 (refer to FIG. 14) are substantially the same as the processes in Step S10 to Step S30 (refer to FIG. 9 and FIG. 10) and the process in Step S33 (refer to FIG. 10) in the first matching process according to Embodiment 1 except that mobile body control server 100 is replaced by mobile body control server 100A, handler determination unit 60 is replaced by handler determination unit 60A, and handler terminal 400 is replaced by handler terminal 400A. Therefore, here, detailed explanations of the processes in Step S110 to Step S130 and the process in Step S133 will be omitted assuming that the explanations have already been provided, and the processes in Step S135 to Step S175 (refer to FIG. 13 and FIG. 14) will be described.

In mobile body control server 100, when the handling timing has arrived (YES in Step S133 after repetition of NO in Step S133 (refer to FIG. 14)), handler determination unit 60A calculates the scheduled handling time according to the operation plan for mobile body 300 and the condition of dirt or damage inside mobile body 300 that has been recognized as a result of the recognition process performed by recognition process executor 50 (Step S135). Handler determination unit 60A generates a recruitment announcement including the condition of dirt or damage inside mobile body 300 and the scheduled handling time for dirt or damage inside mobile body 300.

When the recruitment announcement is generated, communicator 13 transmits the generated recruitment announcement to handler management server 200 (Step S140).

When the recruitment announcement is transmitted from mobile body control server 100A, communicator 23 in handler management server 200 transmits the received recruitment announcement to handler terminal 400A. Note that in the process in Step S140, communicator 13 may directly transmit the generated recruitment announcement to handler terminal 400A; in this case, communicator 23 does not need to transmit the recruitment announcement to handler terminal 400A.

When the recruitment announcement is transmitted from handler management server 200, handler terminal 400A receives the recruitment announcement. Subsequently, handler terminal 400A presents the content of the received recruitment announcement to a user who uses handler terminal 400A and receives input of the availability information from the user in response to the presentation (Step S145).

When the input of the availability information is received, handler terminal 400A generates an application including the availability information on the basis of the received input and transmits the generated application to handler management server 200 (Step S150).

When the application is transmitted from handler terminal 400A, communicator 23 in handler management server 200 receives the application and transmits the received application to mobile body control server 100A. Note that in the process in Step S150, handler terminal 400A may directly transmit the generated application to mobile body control server 100A; in this case, communicator 23 does not need to transmit the application to mobile body control server 100A.

When the application is transmitted from handler management server 200, communicator 13 in mobile body control server 100A receives the application. When the application is received, handler determination unit 60A performs matching between a handler candidate who has applied and mobile body 300 on the basis of the availability information included in the received application, (a part of the process in Step S155, that is, Step S156 in FIG. 14) Handler determination unit 60A determines, from among handler candidates, a handler who handles at least one of dirt and damage inside mobile body 300 (a part of the process in Step S155, that is, Step S157 in FIG. 14). Handler determination unit 60A outputs, as the notification for the determined handler to handle the interior of mobile body 300, a handling request for the determined handler to handle mobile body 300 and a travel request for mobile body 300 to move to the handling place.

When the handling request is output, communicator 13 in mobile body control server 100A transmits the handling request and the matching result to handler control server 200 (Step S160).

When the handling request and the matching result are transmitted, communicator 23 in handler management server 200 receives the handling request and the matching result. Communicator 23 transmits the received handling request to handler terminal 400A owned by the determined handler and transmits the received matching result to handler terminal 400A which has transmitted the application. Handler terminal 400A receives the transmitted handling request and matching result or the transmitted matching result. Handler terminal 400A presents the received handing request and matching result or the received matching result to a user who uses handler terminal 400A (Step S165). Note that in the process in Step S160, communicator 13 may directly transmit the generated handling request to handler terminal 400A owned by the determined handler and directly transmit the matching result to handler terminal 400A which has transmitted the application. In this case, communicator 23 does not need to transmit the handling request or the matching result to handler terminal 400A.

Meanwhile, when the travel request for mobile body 300 to move to the handling place is output, communicator 13 in mobile body control server 100A transmits the travel request to mobile body 300 (Step S170).

When the travel request is transmitted, communicator 33 in mobile body 300 receives the travel request. Subsequently, in response to the travel request, steering unit 32 causes mobile body 300 to move to the handling place (Step S175).

### [2-3. Review]

As described above, according to information processing system 1A, a handler who handles at least one of dirt and damage inside mobile body 300 is determined from the result of sensing the interior of mobile body 300, and a notification for the determined handler to handle the interior of mobile body 300 is output. Therefore, it is possible to assign an appropriate handler to handle the dirt or the damage inside mobile body 300.

### OTHER EMBODIMENTS

Although the information processing system according to one or more aspects of the present disclosure has been thus far described based on Embodiments 1 and 2, the present disclosure is not limited to these embodiments. Various modifications to the present embodiments that can be conceived by those skilled in the art, and forms configured by combining structural elements in different embodiments, without departing from the teachings of the present disclosure may be included in one or more aspects of the present disclosure.
(1) In Embodiment 1, information processing system 1 is described as being configured to include two servers, namely, mobile body control server 100 and handler management server 200, as one example. However, information processing system 1 does not necessarily need to be limited to the example of being configured to include mobile body control server 100 and handler management server 200 as long as substantially the same function as the function provided by mobile body control server 100 and handler management server 200 can be provided. Information processing system 1 may, for example, be configured to include one server capable of providing substantially the same function as the function provided by mobile body control server 100 and handler management server 200. For example, information processing system 1 may be configured to include three or more servers capable of providing, by operating in coordination with one another, substantially the same function as the function provided by mobile body control server 100 and handler management server 200.
(2) In Embodiment 1, information processing system 1 is described as being configured such that mobile body control server 100 performs the recognition process and determines the handler. However, information processing system 1 does not necessarily need to be limited to the configuration in which mobile body control server 100 performs the recognition process and determines the handler as long as the recognition process can be performed and the handler can be determined. For example, information processing system 1 may be configured such that mobile body 300 partially or entirely performs the recognition process or may be configured such that mobile body 300 partially or entirely performs the process of determining the handler.
(3) Some or all of the structural elements included in mobile body control server 100, handler management server 200, mobile body 300, and handler terminal 400 may be one system LSI (Large Scale Integration: large scale integrated circuit). The system LSI is a super multifunctional LSI manufactured by integrating a plurality of components onto a single chip. Specifically, the system LSI is a computer system configured of a microprocessor, read-only memory (ROM), random-access memory (RAM), and so on. A computer program is stored in the ROM. The system LSI achieves its function as a result of the microprocessor operating according to the computer program.

Note that although a system LSI is mentioned here, there are instances where the designations IC, LSI, super LSI, and ultra LSI are used depending on the level of integration. Furthermore, the method of circuit integration is not limited to LSIs, and implementation through a dedicated circuit or a general-purpose processor is also possible. A field programmable gate array (FPGA) which allows programming after LSI manufacturing or a reconfigurable processor which allows reconfiguration of the connections and settings of the circuit cells inside the LSI may also be used.

In addition, depending on the emergence of circuit integration technology that replaces LSI due to progress in semiconductor technology or other derivative technology, it is obvious that such technology may be used to integrate the function blocks. Possibilities in this regard include the application of biotechnology and the like.

(4) One aspect of the present disclosure may be not only the information processing system described above, but also an information processing method including, as steps, characteristic components included in the information processing system. Furthermore, one aspect of the present disclosure may also be a computer program for causing a computer to execute the respective characteristic steps included in the information processing method. Moreover, one aspect of the present disclosure may also be a non-transitory computer-readable recording medium on which this sort of computer program is recorded.

(5) In an embodiment, each of the structural elements may be configured in the form of an exclusive hardware product or may be implemented by executing a software program suitable for the structural element. Each of the structural elements may be implemented by a program executor such as a central processing unit (CPU) or a processor reading and executing the software program recorded on a recording medium such as a hard disk or a semiconductor memory.

### INDUSTRIAL APPLICABILITY

The present disclosure can be widely used in systems that operate mobile bodies.

### REFERENCE MARKS IN THE DRAWINGS

- 1, 1A: information processing system
- 10, 20, 30: controller
- 11,21: display
- 12, 22: operating unit
- 13, 23, 33: communicator
- 14: mobile body manager
- 15: mobile body management database
- 31: sensor
- 32: steering unit
- 40: obtainer
- 50: recognition process executor
- 60, 60A: handler determination unit
- 70: handler manager
- 80: handler management database
- 100, 100A: mobile body control server
- 200: handler management server
- 300: mobile body
- 400, 400A: handler terminal

## Claims

1. An information processing method, comprising the following executed by a computer:
obtaining a result of sensing an interior of a mobile body;
performing a recognition process of recognizing at least one of dirt or damage inside the mobile body, based on the result of sensing;
determining a handler who handles the at least one of the dirt or the damage inside the mobile body, according to a result of the recognition process; and
outputting a notification for the handler to handle the interior of the mobile body.

2. The information processing method according to claim 1, wherein
a handler candidate who is capable of handling the dirt or the damage inside the mobile body is determined as the handler, the dirt or the damage being recognized as the result of the recognition process.

3. The information processing method according to claim 1, wherein
a handler candidate who has time to handle the dirt or the damage inside the mobile body is determined as the handler, the dirt or the damage being recognized as the result of the recognition process.

4. The information processing method according to any one of claims 1 to 3, further comprising:
obtaining a travel path or a position of the mobile body and a position of a handler candidate; and
determining, as the handler, a handler candidate located in a predetermined range from the travel path or the position.

5. The information processing method according to any one of claims 1 to 3, further comprising:
obtaining a position of a handling place associated with the handler, wherein
the notification is a travel request for the mobile body to move to the handling place.

6. The information processing method according to any one of claims 1 to 3, wherein
the notification is a handling request for the handler to handle the mobile body.

7. The information processing method according to claim 6, further comprising:
obtaining a position of the mobile body, wherein
the notification includes the position of the mobile body.

8. The information processing method according to any one of claims 1 to 3, further comprising:
obtaining a position of the handler and a position of the mobile body; and
determining a handling place according to the position of the handler and the position of the mobile body, wherein
the notification includes a position of the handling place, a handling request for the handler, and a travel request for the mobile body.

9. The information processing method according to claim 1, comprising:
presenting, to a handler candidate, a recruitment announcement including a condition of the dirt or the damage inside the mobile body and scheduled handling time for handling the dirt or the damage inside the mobile body, the dirt or the damage being recognized as the result of the recognition process; and
determining, as the handler, a handler candidate who has applied in response to the recruitment announcement.

10. The information processing method according to claim 9, wherein the recruitment announcement includes a cost related to handling of the dirt or the damage inside the mobile body, the dirt or the damage being recognized as the result of the recognition process.

11. The information processing method according to claim 1, further comprising:
obtaining, for each handler candidate, a level of satisfaction of a user of the mobile body handled by the handler candidate in the past;
calculating, for each handler candidate, a score for the handler candidate based on the level of satisfaction; and
determining the handler by further considering the score for each handler candidate.

12. The information processing method according to claim 1, wherein the handler is determined according to a level of the dirt or the damage inside the mobile body, the dirt or the damage being recognized as the result of the recognition process.

13. The information processing method according to claim 1, wherein the handler is determined according to a kind of the dirt or the damage inside the mobile body, the dirt or the damage being recognized as the result of the recognition process.

14. An information processing device, comprising:
an obtainer which obtains a result of sensing an interior of a mobile body;
a recognition process executor which performs a recognition process of recognizing at least one of dirt or damage inside the mobile body, based on the result of sensing; and
a handler determination unit configured to determine a handler who handles the at least one of the dirt or the damage inside the mobile body, according to a result of the recognition process, and output a notification for the handler to handle the interior of the mobile body.

15. A program for causing a computer to execute a first process including the following executed by the computer:
obtaining a result of sensing an interior of a mobile body;
performing a recognition process of recognizing at least one of dirt or damage inside the mobile body, based on the result of sensing;
determining a handler who handles the at least one of the dirt or the damage inside the mobile body, according to a result of the recognition process; and
outputting a notification for the handler to handle the interior of the mobile body.
